# EUROPÄISCHE PATENTSCHRIFT

(11) **EP 0 762 790 B1**
(45) Veröffentlichungstag und Bekanntmachung des Hinweises auf die Patenterteilung: **05.11.2003**
(21) Anmeldenummer: 96112546.5
(22) Anmeldetag: 02.08.1996
(51) Int. Cl.: H04Q 7/26

(54) **Mehrzellenfunksystem mit PBX-Peripheriebaugruppen**
Multi-cellular radio system with PBX and peripheral modules
Système radio multi-cellulaire avec autocommutateur privé et modules périphériques

(30) Priorität: 30.08.1995 DE 19531999
(43) Veröffentlichungstag der Anmeldung: 12.03.1997
(73) Patentinhaber: SIEMENS AKTIENGESELLSCHAFT, 80333 München (DE)
(72) Erfinder: Langmantel, Ernst, 1210 Wien (AT)

(56) Entgegenhaltungen:
- WO-A-94/16531
- WO-A-96/18274

## Beschreibung

Die Erfindung bezieht sich auf ein Mehrzellenfunksystem für ein Kommunikationssystem mit Vermittlungsanlagen, welche Peripheriebaugruppen und/oder externe Funkvermittlungseinheiten für den Anschluß von Basisstationen besitzen, wobei jedes mobile Endgerät mittels einer für das Endgerät spezifischen Identifizierungsinformation genau einer Peripheriebaugruppe und/oder Funkvermittlungseinheit zugeordnet ist und Funkverbindungswege zu bzw. von mobilen Endgeräten so herstellbar sind, daß sie unabhängig von dem Ort des Endgerätes immer über die ihm zugeordnete Peripheriebaugruppe und/oder Funkvermittlungseinheit erfolgen.

Bei Systemen dieser Art sind jeder Vermittlungsanlage eine oder mehrere Basisstationen für mobile Endgeräte (Schnurlostelefone) sowie üblicherweise auch für feste Endgeräte zugeordnet.

Die vermittlungstechnische Software, welche die Teilnehmer-Leistungsmerkmale realisiert, läuft meist in einer oder mehreren zentralen Rechnerbaugruppen der Vermittlungsanlagen. Die drahtgebundenen Endgeräte sind dabei über Peripheriebaugruppen mit eigenem Prozessor angeschlossen. Die Software der Peripheriebaugruppen realisiert hierbei kein vermittlungstechnischen Leistungsmerkmale des Systems, sondern ist für die Hardware/Software-Umsetzung zuständig, z.B. bei digitalen Schnittstellen typischerweise Schicht 1 und Schicht 2 gemäß dem ISO OSI 7-Schichten-Modell.

Der Wirkungsbereich einer Basisstation ist bei Trägerfrequenzen im 900 Mhz bzw. 1,9 Ghz-Bereich und üblichen, gesundheitsverträglichen Sendeleistungen in Gebäuden auf ein Umfeld von ca. 20-50m begrenzt (siehe ETSI-Standards CT 1, CT 2, DECT). Dieses Umfeld, das eine Basisstation versorgt, wird "Zelle" genannt. In der Praxis, z.B. in einem Firmengebäude, wird dieses Umfeld oder Bereich den Mobilitätsanforderungen nicht gerecht, so daß eine Vermittlungsanlage eine Mehrzahl von Basisstationen aufweist.

Es besteht die Forderung, daß jedes Endgerät sowohl in seinem Ruhezustand als auch im Gesprächszustand beliebig zwischen den Funkzellen jeder Vermittlungszentrale, bzw. auch innerhalb eines Netzes von Vermittlungszentralen beweglich ist. Die Beweglichkeit des mobilen Endgerätes im Ruhezustand wird in der Fachsprache als "Roaming" und die Beweglichkeit im Gesprächszustand als "Handover" bezeichnet.

Aus dem Dokument WO 94/16531 der Anmelderin geht ein System der gegenständlichen Art hervor, bei welchem das Steuerungsprogramm in den Funkvermittlungseinheiten dafür sorgt, daß die Fernmeldeverbindungen eines mobilen Endgerätes unabhängig von dessen Ort über die ihm zugeordnete Funkvermittlungseinheit erfolgen. Hierbei werden externe Funkvermittlungseinheiten verwendet. Eine andere Realisierung ist in dem Dokument PCT/EP92/00418 beschrieben, wobei anstelle der externen Funkvermittlungseinheiten als Server eine Peripheriebaugruppe verwendet wird, welche ebenso wie die externe Funkvermittlungseinheit die Anschaltung von der Vermittlungsanlage bekannten Endgerätetypen über feste Anschlüsse (Ports) simuliert.

Sollen den an den Fernmeldeverbindungen beteiligten mobilen Endgeräten die ihnen in ihrer originären Vermittlungsanlage zugewiesenen Leistungsmerkmale im gesamten Wirkungsbereich aller Basisstationen uneingeschränkt und ortsunabhängig zur Verfügung stehen, so ergibt sich die Forderung, daß neben der in WO 94/16531 beschriebenen Sprachkanalverbindung auch eine Signalisierungsverbindung zwischen der "Heimat"-Funkvermittlungseinheit und dem Endgerät hergestellt und aufrecht erhalten werden muß.

Wesentlich ist hierbei, daß die Signalisierungsinformationen eines mobilen Endgerätes, z.B. gewählte Ziffern, Drücken von Signaltaste etc., unabhängig von dem Aufenthaltsort, immer über die simulierten "persönlichen" Ports in die "Heimat"-Vermittlungsanlage gelangen, da nur so sichergestellt wird, daß das mobile Endgerät mit seinen Berechtigungen, z.B. Amtsberechtigungen, persönlichen, zentral gespeicherten Kurznummerzielen, etc., somit mit seinem sogenannten "user profile", versorgt wird.

Für die Vermittlungsanlage relevante Signalisierungsinformationen eines mobilen Endgerätes müssen dabei von der Funkvermittlungseinheit auf das Protokoll des in Richtung der Vermittlungsanlage simulierten Drahtendgerätetyps umgewandelt werden. Eine umgekehrte Umwandlung ist sinngemäß für Signalisierungsinformationen erforderlich, die von der Vermittlungsanlage stammen und für das mobile Endgerät bestimmt sind. Somit müssen während einer Gesprächsverbindung nicht nur die Sprachdaten ständig über die "Aufenthalts"-Funkvermittlungseinheit zu der "Heimat"-Funkvermittlungseinheit durchgeschleift werden, sondern es gilt gleiches auch für die Signalisierungsinformationen zwischen mobilen Endgeräten und "Heimat"-Funkvermittlungseinheit.

Es ist eine Aufgabe der Erfindung, ein Mehrzellenfunksystem zu schaffen, bei welchem ein sprachbegleitender Signalisierungsaustausch auch für die oben erwähnten "Verlängerungsverbindungen" zwischen Aufenthalts- und Heimatfunkvermittlungseinheit sichergestellt ist.

Diese Aufgabe wird mit einem Mehrzellenfunksystem gelöst, bei welchem die Peripheriebaugruppen (SLMC) und/oder Funkvermittlungseinheiten (RE) dazu eingerichtet sind, die Signalisierungsnachrichten in User-to-User Informationen einer digitalen Verbindung zu packen.

Dank der Erfindung ist auf einfache und verläßliche Art eine sprachbegleitende Signalisierung möglich.

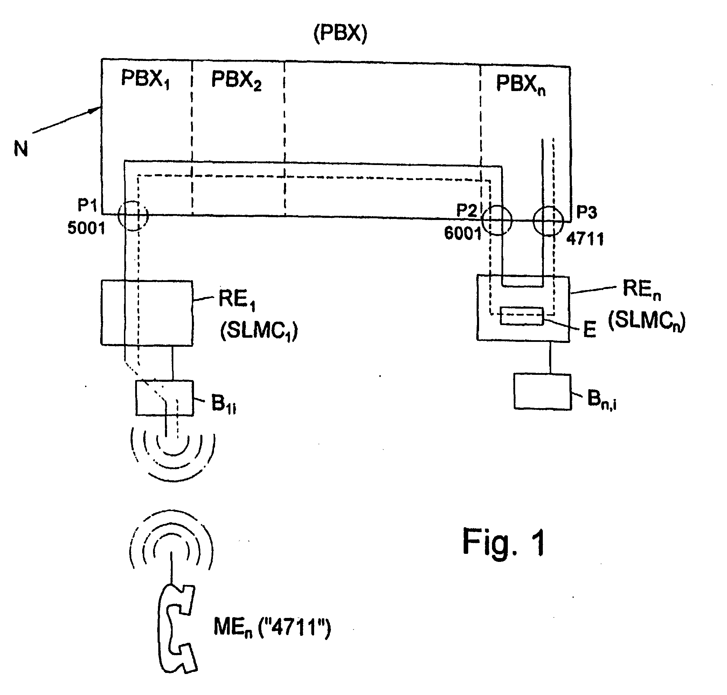

Die Erfindung ist im folgenden anhand von Ausführungsbeispielen näher erläutert, die in der Zeichnung veranschaulicht sind. In dieser zeigen die Fig. 1 bis 3 je eine Ausführung der Erfindung unter Verwendung eines schematischen Blockschaltbildes.

Fig. 1 zeigt ein Netz N, bestehend aus mehreren Vermittlungsanlagen PBX₁ ... PBXₙ, doch ist die Erfindung in gleicher Weise bei einer einzigen Vermittlungsanlage PBX mit mehreren Funkvermittlungseinheiten bzw. Peripheriebaugruppen anwendbar. An das Netz N der Vermittlungsanlagen PBX₁ ... PBXₙ sind über Funkvermittlungseinheiten RE bzw. Peripheriebaugruppen SLMC₁ ... SLMCₙ Basisstationen B₁ᵢ ... Bₙᵢ angeschlossen. Weiters ist ein mobiles Endgerät MEₙ (Rufnummer "4711") gezeigt, das zu der "Heimat"-Einheit REₙ (SLMCₙ) gehört. Gesprächsverbindungen sind hierbei als durchgehende, Signalisierungsverbindungen als strichlierte Linien eingezeichnet.

Im folgenden wird das Bestehen einer Verlängerungsverbindung von einem Port P1 (Rufnummer "5001") zu einem Port P2 (Rufnummer "6001") angenommen, wobei an Port P1 die "Aufenthalts"-Funkvermittlungseinheit RE₁ angeschaltet ist, die Signalisierungsinformationen von dem Endgerät MEₙ ("4711") erhält. Befindet sich der Teilnehmer im Bereich, d.h. der zugeordneten Zelle bzw. Zellen seiner Heimatfunkvermittlungseinheit REₙ, so entfällt selbstverständlich die "Verlängerungsverbindung" und an die Stelle von RE₁ tritt die Heimat-Funkvermittlungseinheit REₙ.

An Port 2 (Rufnummer "6001) ist die Heimat-Funkvermittlungseinheit REₙ angeschaltet. Sie muß die vom mobilen Endgerät MEₙ über die Aufenthalts-Funkvermittlungseinheit RE₁ an Port P2 empfangene Teilnehmersignalisierung über den Heimatport P3 des sendenden mobilen Endgerätes MEₙ ("4711") an die Vermittlungsanlage bzw. das Netz N weitergeben. Ebenso muß eine Signalisierung in umgekehrter Richtung laufen können, wobei in beide Richtungen üblicherweise, z.B. in einem Protokollumsetzer E, eine Protokollumwandlung vorgenommen wird. Da die Signalisierung der Vermittlungsanlage zu dem mobilen Endgerät bzw. umgekehrt immer über denselben Port P3 läuft, erscheint das tatsächlich mobile Endgerät MEₙ aus der Sicht der Vermittlungsanlage als stationäres Drahtendgerät. Über die Protokollumwandlung kann weiters erreicht werden, daß das mobile Endgerät MEₙ auch als ein der Vermittlungsanlage bereits bekannter Endgerätetyp erscheint.

Im Falle einer digitalisierten (ISDN-)Verbindung zwischen P1 und P2 wird nun nach dem Stand der Technik von der Vermittlungsanlage PBX₁ eine an Port 1 empfangene Signalisierung der Funkvermittlungseinheit RE1 bzw. Peripheriebaugruppe SLMC1 als Signalisierung des betreffenden - hier emulierten - (ISDN-)Drahtendgerätes mit der Rufnummer "5001" zur Steuerung einer Verbindung von bzw. zu Port 1 interpretiert und entsprechend bewertet.

Die Verbindung von Port P1 zu der "Heimat RE" für eine abgehende Verbindung muß von der Funkvermittlungseinheit RE₁ aufgrund der an der Funkschnittstelle empfangenen Teilnehmeridentifikation des mobilen Endgerätes MEₙ aufgebaut werden, nicht jedoch auf Basis der von dem mobilen Endgerät empfangenen Wahlziffern. Die vom mobilen Endgerät empfangenen Wahlziffern dürfen nicht als Wahlziffem eines hier emulierten Drahtendgerätes an Port 1 an die Vermittlungsanlage PBX weitergegeben werden, sondern als Wahlziffern des emulierten Endgerätes an Port 3 ("Heimat RE"). In der Vermittlungsanlage wird beispielsweise im Gesprächszustand der "Verlängerungsverbindung" eine Zifferninformation des mobilen Endgerätes MEₙ verworfen und sie könnte daher nie ihr Ziel erreichen. "Signaltaste" wiederum würde zu einer Rückfrage innerhalb der Verlängerungsverbindung, nicht jedoch in der eigentlichen Verbindung für den Port 3 ("4711") in der Heimat-Vermittlungsanlage PBXₙ führen. Dies wäre ebenso unerwünscht wie das Verwerfen einer Zifferninformation. Die Verlängerungsverbindung für eine ankommende Verbindung zu einem mobilen Endgerät wird von der Heimat RE aufgrund der dort gespeicherten Aufenthaltsinformation zur aktuellen Aufenthalts-RE aufgebaut.

Die Erfindung sieht nun vor, daß die Peripheriebaugruppen SLMC und/oder Funkvermittlungseinheiten RB dazu eingerichtet sind, die Signalisierungsnachrichten in User-to-User Informationen einer digitalen Verbindung zu packen. So werden z.B. die Wahlinformationen des mobilen Endgerätes von Port 1 an Port 2 bzw. Display-Informationen von Port 2 zu Port 1 zum mobilen Endgerät weitergegeben.

Nach dem ETSI-Standard ("European Telecommunication Standardisation Institute") ist die User-to-User Info (UUI) als "supplementary service" einer ISDN-Vermittlungsanlage vorgesehen und kann zur Verwirklichung der Erfindung herangezogen werden, um die Signalisierungsnachrichten innerhalb von UUI-Informationselementen verpackt mit Nachrichten im D-Kanal zum jeweiligen Partner zu senden.

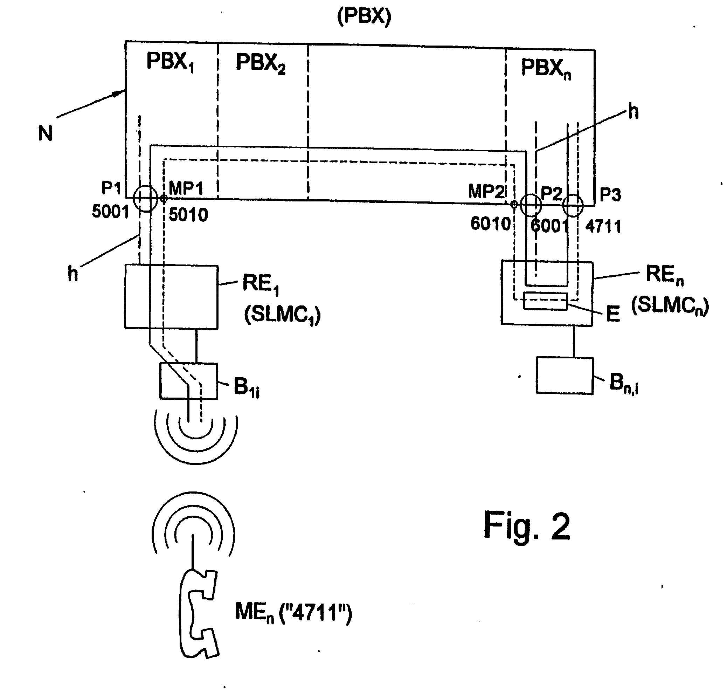

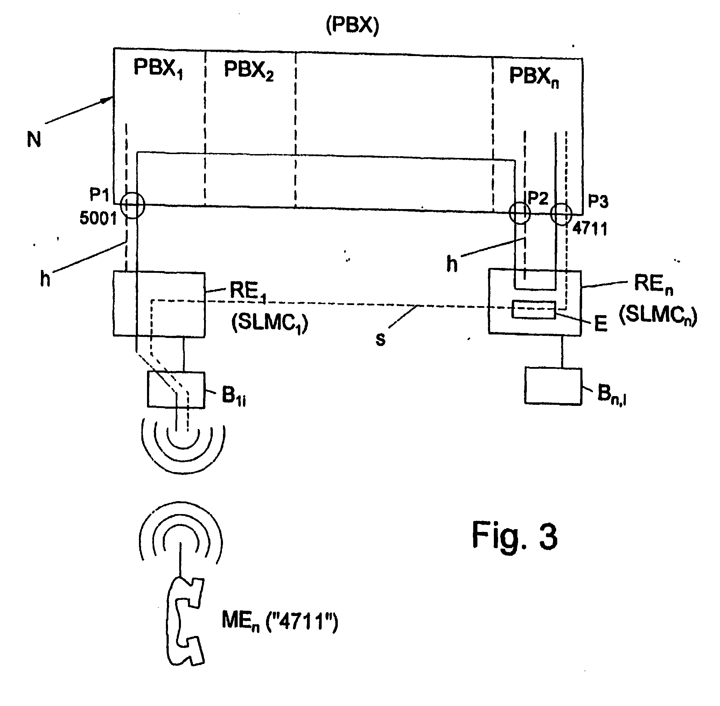

Es können zur verbindungsbegleitenden Signalierungsübertragung auch andere Maßnahmen vorgesehen sein. So zeigt Fig. 2 in einer Darstellung ähnlich Fig. 1 die Nutzung spezieller Managementports an den Peripheriebaugruppen SLMC bzw. den Funkvermittlungseinheiten RE der PBX bzw. des PBX-Netzes N, die hier mit MP1 "5010" und MP2 "6010" bezeichnet sind. Es ist zwischen diesen Ports eine Managementverbindung innerhalb der PBX bzw. des PBX-Netzes N eingezeichnet, die für den Signalisierungstransfer zwischen den Ports dient, für die eine Verlängerungsverbindung (des Sprachkanals) zwischen zwei Funkvermittlungseinheiten RE₁, RBₙ bzw. zwei Peripheriebaugruppen SLMC₁, SLMCₙ besteht. Dabei kann mehreren oder auch allen Gesprächsverbindungen, die aufgebaut sind, eine einzige Verbindung als zentraler Zeichenkanal zwischen Managementports MP1, MP2 zugeordnet sein. In Fig. 2 ist allerdings nur eine einzige Gesprächsverbindung eingezeichnet. Die Signalisierung über Port 1 bzw. Port 2, in Fig. 2 und 3 mit h bezeichnet, wird nur zum Verbindungsauf- bzw. -Abbau der Verlängerungsverbindung genutzt, nicht jedoch für den Signalisierungstransfer zum bzw. von dem mobilen Endgerät.

Innerhalb der Managementverbindung kann der Sprachkanal für den Signalisierungsaustausch herangezogen sein, z.B. bei digitalen Verbindungen wie ISDN mit einer derzeit üblichen Bruttoübertragungsrate von 64 kbit/s. Bei analogen Managementverbindungen kann durch Einsatz von Modems ebenfalls der Sprachkanal für den Signalisierungsaustausch herangezogen werden.

Zum Signalisierungsaustausch zwischen den Managementports kann jedoch auch ein verbindungsloser Datenübermittlungsdienst ("Connectionless Service", "Datagramm-Dienst") herangezogen werden, vorausgesetzt die Vermittlungsanlage bietet dieses Leistungsmerkmal.

Nimmt man den erhöhten Verkabelungsaufwand in Kauf, so können für den Signalisierungsaustausch zwischen den Funkvermittlungseinheiten RE oder Peripheriebaugruppen SLMC auch getrennte, bezüglich der Vermittlungsanlagen PBX oder des Netzes N externe Signalisierungsleitungen s vorgesehen sein, wie in Fig. 3 schematisch und strichliert dargestellt.

## Patentansprüche

1. Mehrzellenfunksystem für ein Kommunikationssystem mit zumindest einer Vermittlungsanlage (PBX), welche Peripheriebaugruppen (SLMC) und/oder externe Funkvermittlungseinheiten (RE 1, RE 2) für den Anschluß von Basisstationen (B) besitzt, wobei jedes mobile Endgerät (ME) mittels einer für das Endgerät spezifischen Identifizierungsinformation genau einem Port einer Peripheriebaugruppe und/oder Funkvermittlungseinheit zugeordnet ist und Funkverbindungswege zu bzw. von mobilen Endgeräten (ME) so herstellbar sind, daß sie unabhängig von dem Ort des Endgerätes mittels einer Hilfs("Verlängerungs")-verbindung immer über den ihm zugeordneten Port von Peripheriebaugruppe und/oder Funkvermittlungseinheit erfolgen,
**dadurch gekennzeichnet,**
**daß** die Peripheriebaugruppen (SLMC) und/oder Funkvermittlungseinheiten (RE) dazu eingerichtet sind, die Signalisierungsnachrichten von und zu den Endgeräten (ME) in User-to-User Informationen einer digitalen Verbindung zu packen.

2. Mehrzellenfunksystem nach Anspruch 1,
**dadurch gekennzeichnet,**
**daß** die Vermittlungsanlage eine ISDN-Vermittlungsanlage mit einem User-to-User-Info Leistungsmerkmal ist.

3. Mehrzellenfunksystem nach Anspruch 2,
**dadurch gekennzeichnet,**
**daß** die Signalisierungsnachrichten dem D-Kanal zugeordnet sind.

## Claims

1. Multicell radio system for a communications system having at least one exchange (PBX), which has peripheral assemblies (SLMC) and/or external radio switching units (RE 1, RE 2) for the connection of base stations (B), with each mobile terminal (ME) being associated by means of identification information, which is specific for that terminal, with one and only one port of a peripheral assembly and/or radio switching unit, and in which the radio connecting paths to and from mobile terminals (ME) can be set up such that they are always produced via the port associated with them of the peripheral assembly and/or radio switching unit by means of an auxiliary ("extension") connection, independently of the location of the terminal,
**characterized**
**in that** the peripheral assemblies (SLMC) and/or radio switching units (RE) are set up to pack the signalling messages from and to the terminals (ME) in user-to-user information for a digital connection.

2. Multicell radio system according to Claim 1,
**characterized**
**in that** the exchange is an ISDN exchange with a user-to-user info service feature.

3. Multicell radio system according to Claim 2,
**characterized**
**in that** the signalling messages are allocated to the D channel.

## Revendications

1. Système radio multicellulaire pour un système de communication qui compte au moins un central de communication (PBX) qui possède des modules périphériques (SLMC) et/ou des unités externes de communication radio (RE1, RE2) qui permettent le raccordement à des postes de base (B), chaque terminal mobile (ME) étant associé précisément à un port d'un module périphérique et/ou d'une unité de communication radio au moyen d'une information d'identification spécifique au terminal, et des parcours de communication radio vers et depuis les terminaux mobiles (ME) pouvant être établis de manière à s'effectuer toujours , au moyen d'une liaison auxiliaire, par le port qui leur est associé dans le module périphérique et/ou dans l'unité de communication radio, indépendamment du lieu où se trouve le terminal,
**caractérisé en ce que** les modules périphériques (SLMC) et/ou les unités de communication radio (RE) sont conçues de manière à intégrer les messages de signalisation depuis et vers les terminaux (ME) dans des informations échangées entre utilisateurs dans une liaison numérique.

2. Système radio multicellulaire selon la revendication 1, **caractérisé en ce que** le central est un central RNIS qui dispose d'une caractéristique de service d'information entre les utilisateurs.

3. Système radio multicellulaire selon la revendication 2, **caractérisé en ce que** les messages de signalisation sont associés au canal D.
